# EUROPEAN PATENT APPLICATION

(11) **EP 3 590 806 A1**
(43) Date of publication of application: **08.01.2020**
(21) Application number: 18212891.8
(22) Date of filing: 17.12.2018
(51) Int. Cl.: B62J 15/02

(54) **MUDGUARD SUPPORTING DEVICE**

(30) Priority: 06.07.2018 TW 10723561
(71) Applicant: Sunny Wheel Industrial Co., Ltd., Chang Hua, Hsien 50442 (TW)
(72) Inventor: HSU, Kuo-Chung, 50442 Chang Hua Hsien (TW)
(74) Representative: Zimmermann, Tankred Klaus

(57) **Abstract**

A mudguard supporting device includes a supporting member (10) and a connecting member (20). The supporting member (10) has at least one through hole (15) that extends through a first surface (13) and a second surface (14), and at least one passive engaging portion (16) that is formed in one of the first and second surfaces (13, 14). The connecting member (20) detachably engages the supporting member (10), and has a main portion (21), a first coupling portion (22) that is connected to the main portion (21), and that removably extends through the at least one through hole (15), a second coupling portion (23) that is connected to the first coupling portion (22), and that removably abuts against the second surface (14) of the supporting member (10), and an active engaging portion (24) that is connected to one of the main portion (21) and the second coupling portion (23), and that removably engages the at least one passive engaging portion (16) of the supporting member (10).

## Description

The disclosure relates to a bicycle accessory, and more particularly to a supporting device for holding a mudguard.

Generally, a mudguard of a bicycle is installed on the bicycle by being coupled with a mudguard strut and is disposed above a wheel of the bicycle to block out dust and mud that are brought up by the wheel when it rotates.

For a conventional integrated mudguard supporting device, all parts of the device are molded as one piece such that the dimensions thereof cannot be reduced to facilitate packaging or shipping. Moreover, the assembling of the device to a bicycle frame and disassembling of the device from the bicycle frame involve numerous threaded components and multiple subassembly procedures which add inconvenience to the process overall.

In order to resolve the abovementioned problems, Chinese Patent No.CN2551547Y disclosed another conventional mudguard supporting device, which includes a pair of fixing buckles, and a pair of supporting rods. The mudguard is connected to the fixing buckles by engaging each of two sides of a mudguard with a groove of a respective one of the fixing buckles. Then, each of the supporting rods is inserted into a slot of a respective one of the fixing buckles. Finally, a protruding portion at the top of each of the supporting rods is engaged with a groove of a respective one of the two sides of the mudguard, so that the fixing buckles, the supporting rods and the mudguard are all connected.

Although an assembly of the abovementioned conventional supporting device does not involve tools or threaded components, the structure of the fixing buckles is fairly complicated. Moreover, the interlocking system between the mudguard and the fixing buckles is not sturdy enough that the mudguard may easily come loose after long-term use.

Therefore, the object of the disclosure is to provide a mudguard supporting device that can alleviate at least one of the drawbacks of the prior art.

According to the disclosure, the mudguard supporting device includes a supporting member and a connecting member. The supporting member is elongated and has a first surface, a second surface that is opposite to the first face, at least one through hole that extends through the first and second surfaces, and at least one passive engaging portion that is formed in one of the first and second surfaces. The connecting member has a main portion that has a first face, and that is adjacent to the first surface of the supporting member, a first coupling portion that is connected to the main portion, and that removably extends through the at least one through hole, a second coupling portion that is connected to the first coupling portion, and that removably abuts against the second surface of the supporting member, and an active engaging portion that is connected to one of the main portion and the second coupling portion, and that removably engages the at least one passive engaging portion of the supporting member.

Other features and advantages of the disclosure will become apparent in the following detailed description of the embodiments with reference to the accompanying drawings, of which:
FIG. 1 is a perspective view of a first embodiment of the mudguard supporting device according to the disclosure coupled to a mudguard;
FIG. 2 is a fragmentary exploded perspective view of the first embodiment;
FIG. 3 is a fragmentary sectional view of the first embodiment;
FIG. 4 is a perspective view of a second embodiment of the mudguard supporting device according to the disclosure coupled to the mudguard;
FIG. 5 is a fragmentary exploded perspective view of the second embodiment;
FIG. 6 is a fragmentary perspective view of the second embodiment, illustrating an assembly process where a second coupling portion extends through a through hole;
FIG. 7 is another fragmentary perspective view of the second embodiment, illustrating the assembly process where a connecting member is rotated approximately 90 degrees relative to a supporting member; and
FIG. 8 is a fragmentary sectional view of the second embodiment, illustrating the assembly process where an active engaging portion of the connecting member engages one of passive engaging potions of the supporting member.

Before the present disclosure is described in greater detail, it should be noted that where considered appropriate, reference numerals or terminal portions of reference numerals have been repeated among the figures to indicate corresponding or analogous elements, which may optionally have similar characteristics.

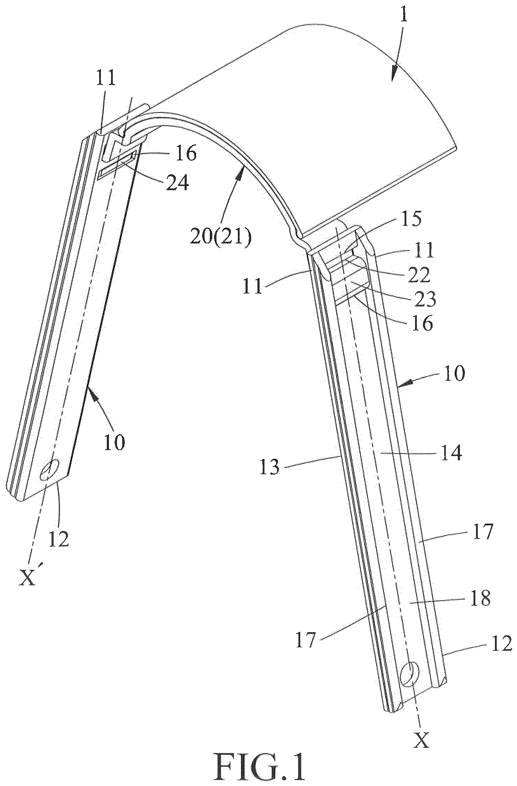

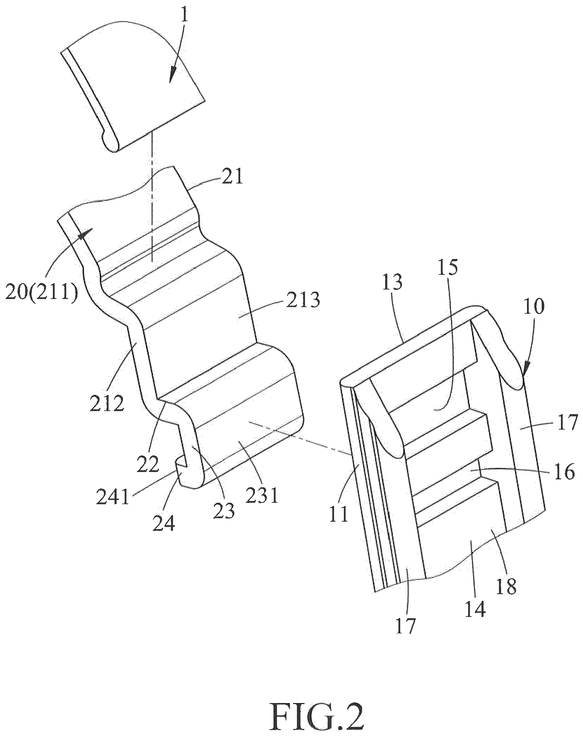

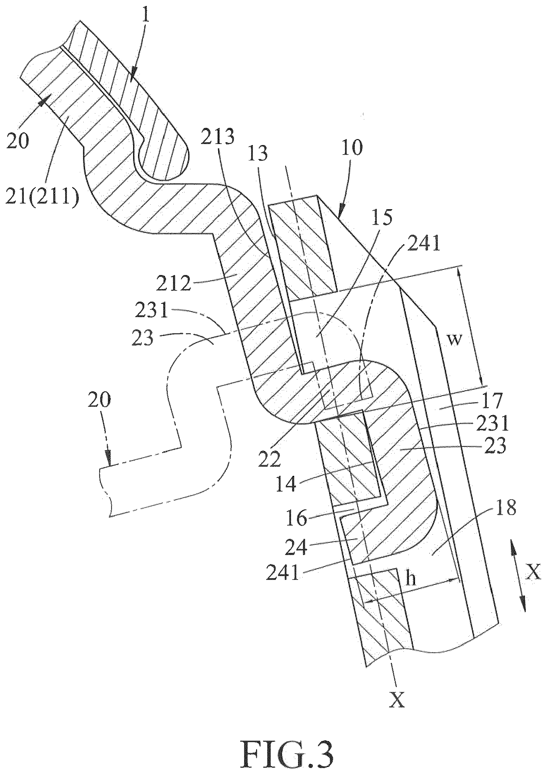

Referring to FIGS. 1, 2 and 3, a first embodiment of the mudguard supporting device according to the disclosure is adapted to be coupled to a mudguard 1 and to be connected to a bicycle frame (not shown). The mudguard supporting device includes a pair of elongated supporting members 10 and a connecting member 20 interconnecting the supporting members 10. One of the supporting members 10 extends along a first axis (X), and the other one of the supporting members 10 extends along a second axis (X'). For the sake of brevity, since the mudguard supporting device has a symmetrical structure, only one of the supporting members 10 and one end of the connecting member 20 is represented in FIGS. 2 and 3.

The supporting member 10 has a first installing portion 11, a second installing portion 12 that is opposite to the first installing portion 11 along the first axis (X), a first surface 13 that extends from the first installing portion 11 to the second installing portion 12, a second surface 14 that is opposite to the first surface 13, at least one through hole 15 that extends through the first and second surfaces 13, 14, at least one passive engaging portion 16 that extends through the first and second surfaces 13, 14, and two protrusions 17 that protrude from the second surface 14, that extend in the first axis (X), and that cooperate with the second surface 14 to define an elongated groove 18. In the first embodiment, the at least one passive engaging portion 16 of the supporting member 10 is configured as a rectangular slot, while in other embodiments, the passive engaging portion 16 may be configured as a recess formed in the second surface 14. Moreover, in the present embodiment, only one through hole 15 and one passive engaging portion 16 are present, and are formed in the first installing portion 11 and are arranged along the first axis (X). The second installing portion 12 is adapted to be connected to the bicycle frame. In other embodiment(s), the supporting member 10 may have multiple through holes 15 and passive engaging portions 16 that are alternately arranged.

In the present embodiment, the connecting member 20 is detachably connected to the first installing portion 11 of the supporting member 10. The connecting member 20 is metal and has a rectangular cross-section perpendicular to the first axis (X) . Specifically, the connecting member 20 has a main portion 21, a first coupling portion 22 that is connected to the main portion 21, a second coupling portion 23 that is connected to the first coupling portion 22, and an active engaging portion 24 that is connected to one of the main portion 21 and the second coupling portion 23. The main portion 21 has a positioning section 211 that is adapted to be coupled to the mudguard 1 and that has an arch shape, and an extending section 212 that extends from the positioning section 211 and that has a first face 213.

In this embodiment, the first coupling portion 22 is connected to an end of the extending section 212 of the main portion 21 that is opposite to the positioning section 211, and the first coupling portion 22 is transverse to the extending section 21. The second coupling portion 23 is transverse to the first coupling portion 22 and is substantially parallel to the first face 213 of the main portion 21. In this embodiment, the active engaging portion 24 is connected to and is substantially perpendicular to the second coupling portion 23, and cooperates with the first coupling portion 22 and the second coupling portion 23 to form a C-shaped structure. The second coupling portion 23 of the connecting member 20 has a side surface 231 that is substantially parallel and offset from the first face 213 of the main portion 21. The active engaging portion 24 has a distal end 241 that is opposite to the second coupling portion 23. A distance (h) between the side surface 231 and the distal end 241 is smaller than a width (w) of the through hole 15 in a direction of the first axis (X) (see FIG. 3).

For a further understanding of the functions, the technical means, and the intended effects of the collaboration of the various components of the disclosure, the following description is provided with the hope that a more in-depth and thorough understanding of the disclosure may ensue.

As shown by the dash-dotted lines in FIG. 3, and in conjunction with FIG. 2, when one of the supporting members 10 and the connecting member 20 are to be assembled, by having the distance (h) between the side surface 231 and the distal end 241 of the connecting member 20 smaller than the width (w) of the through hole 15 of the supporting member 10 in the direction of the first axis (X), an end of the connecting member 20 can pass through the through hole 15 of the supporting member 10 from the first surface 13 toward the second surface 14.

Furthermore, as shown by the solid lines in FIG. 3, when the first coupling portion 22 is inserted into the through hole 15, the connecting member 20 is then rotated relative to the supporting member 10, and when the first face 213 is adjacent to the first surface 13, the second coupling portion 23 abuts against the second surface 14, and the active engaging portion 24 engages the passive engaging portion 16. At this time, the second coupling portion 23 is retained in the elongated groove 18.

To disassemble the assembly, as shown in FIG. 3, the connecting member 20 is rotated reversely relative to the supporting member 10 such that the active engaging portion 24 is disengaged from the passive engaging portion 16, and when the first face 213 is moved away from the first surface 13, the second coupling portion 23 and the active engaging portion 24 may be consecutively withdrawn from the through hole 15, and the connecting member 20 may be detached from the supporting member 10.

Therefore, in the first embodiment of the mudguard supporting device according to the disclosure, by having the abovementioned structure formed by the first coupling portion 22, the second coupling portion 23 and the active engaging portion 24, the connecting member 20 can easily engage or be disengaged from the supporting member 10 via the through hole 15 and the passive engaging portion 16 thereof. The overall structure of the assembly is not only stable and simple, but relatively easy to be assembled and disassembled.

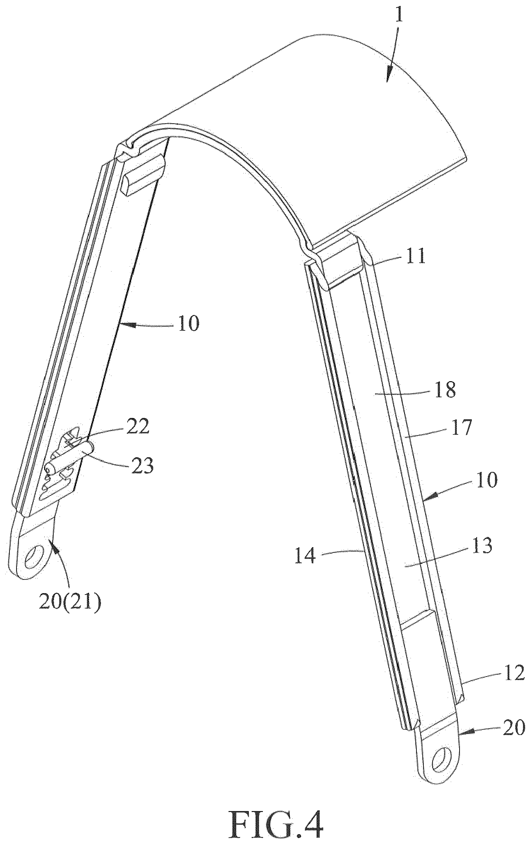

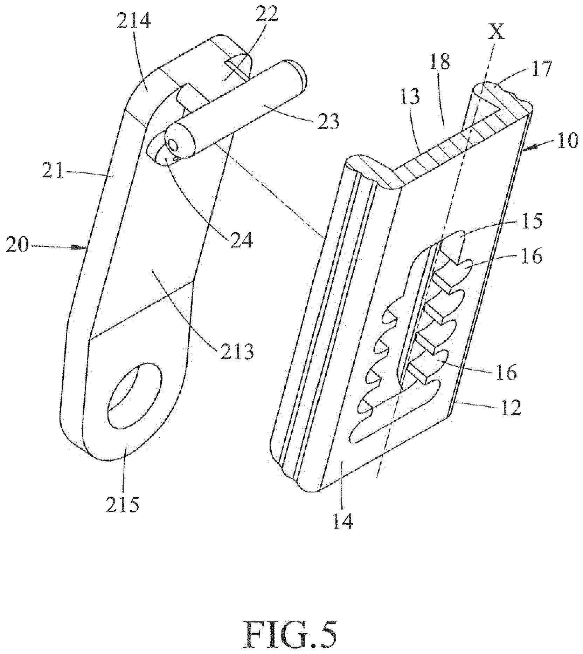

Referring to FIGS. 4 and 5, a second embodiment of the mudguard supporting device according to the disclosure is disclosed. The difference between the second embodiment and the first embodiment resides in the following. The second embodiment of the mudguard supporting device includes a pair of supporting members 10 that serve as mudguard struts, and a pair of connecting members 20 that are mounted to a bicycle frame (not shown). The first and second surfaces 13, 14 of the supporting members 10 serve respectively as outer and inner surfaces (i.e., the second surfaces 14 of the supporting members 10 face each other) . For the sake of clarity and simplicity of illustration, only one of the supporting members 10 and one of the connecting members 20 are described in reference to FIGS. 5 to 8.

In this embodiment, the supporting member 10 has one through hole 15 and a plurality of passive engaging portions 16. The through hole 15 is formed in the second installing portion 12 and is elongated along the first axis (X). The passive engaging portions 16 extend through the first and second surfaces 13, 14, intersect the through hole 15, and are spaced apart along the first axis (X) . The two protrusions 17 protrude from the first surface 13, and cooperate with the first surface 13 to define the elongated groove 18.

In this embodiment, the main portion 21 and the first coupling portion 22 of the connecting member 20 are perpendicular to each other. The second coupling portion 23 of the connecting member 20 extends in a direction perpendicular to the first axis (X), and has a length in the direction perpendicular to the first axis (X) not larger than a length of the through hole 15 along the first axis (X). A width of the first coupling portion 22 in the direction perpendicular to the first axis (X) is not larger than that of the through hole 15. In the present embodiment, the main portion 21 of the connecting member 20 has an inner end section 214 that is removably retained in the elongated groove 18, and an outer end section 215 that is opposite to the inner end section 214 and that is adapted to be connected to the bicycle frame (not shown) . The first face 213 of the main portion 21 extends from the inner end section 214 to the outer end section 215. The first coupling portion 22, the second coupling portion 23 and the active engaging portion 24 are disposed at the inner end section 214. Specifically, the active engaging portion 24 protrudes from the first face 213 of the main portion 21.

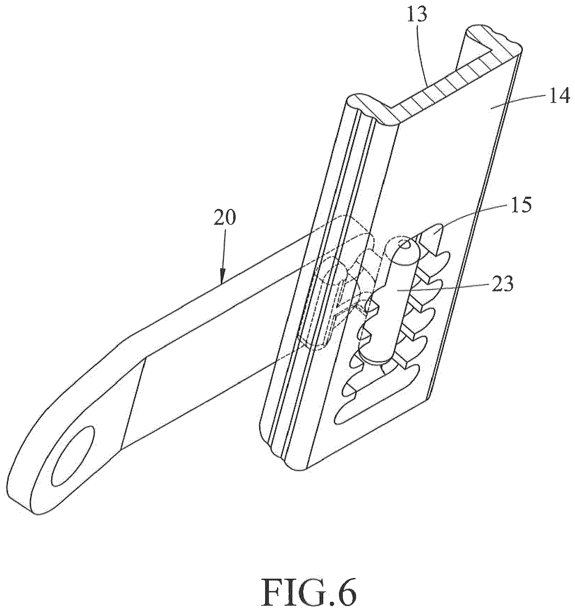

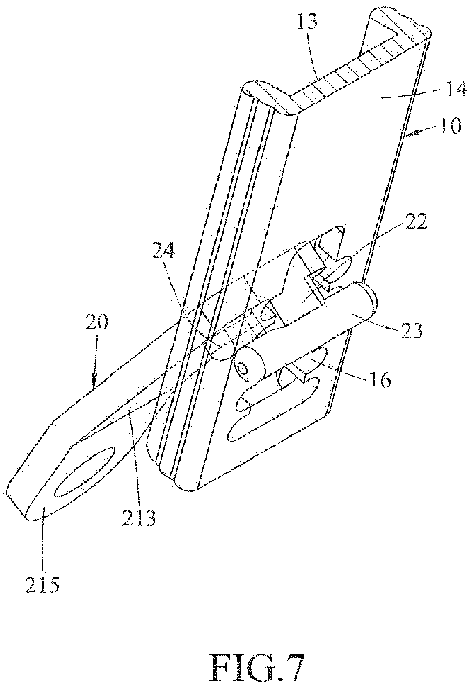

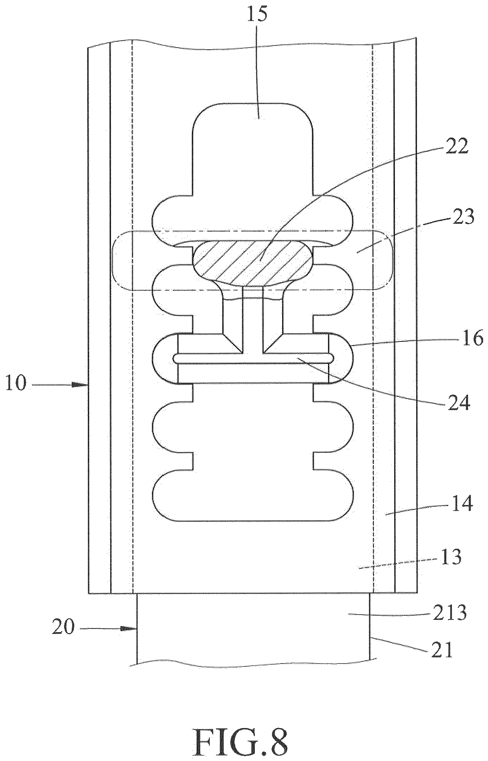

As shown in FIGS. 5 and 6, in regards to assembling, since a length of the second coupling portion 23 in the direction perpendicular to the first axis (X) is not larger than the length of the through hole 15 along the first axis (X), the second coupling portion 23 may pass through the through hole 15 of the supporting member 10 when the connecting member 20 is rotated approximately 90 degrees relative to the supporting member 10 to a position where the second coupling portion 23 is parallel to the through hole 15. When the second coupling portion 23 fully passes through the through hole 15 from the first surface 13 through the second surface 14, the connecting member 20 may be rotated reversely until the second coupling portion 23 is perpendicular to the first axis (X) (shown in FIG. 7). At the moment, the connecting member 20 is inclined with respect to the supporting member 10, and when the first face 213 is moved adjacent to the first surface 13, the active engaging portion 24 may engage one of the passive engaging portions 16, so that the connecting member 20 and the supporting member 10 cooperatively form an interlocked assembly (shown in FIGS. 4 and 8) .

To disassemble the assembly in the state shown in FIGS. 4 and 8, the outer end section 215 of the connecting member 20 is first pushed to move the first face 213 away from the connecting member 20 such that the active engaging portion 24 is disengaged from the one of the passive engaging portions 16 (as shown in FIG. 7). Then, the connecting member 20 is rotated approximately 90 degrees relative to the supporting member 10 such that the second coupling portion 23 is parallel to the through hole 15. Finally, the connecting member 20 may be pulled away and become fully detached from the supporting member 10.

Moreover, a length of the mudguard supporting device between the first installing portion 11 of the supporting member 10 and the outer end section 215 is adjustable by engaging the active engaging portion 24 of the connecting member 20 with a selected one of the passive engaging portions 16 of the supporting member 10. In such a manner, the mudguard supporting device may be adapted to fit various kinds of bicycle frames and wheels.

In summary, the mudguard supporting device according to the disclosure not only has a simple and stable structure but is easy to be assembled and disassembled. Thus, the object of the disclosure may indeed be achieved.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A mudguard supporting device **characterized by**:
a supporting member (10) being elongated, and having
a first surface (13),
a second surface (14) that is opposite to said first surface (13),
at least one through hole (15) that extends through said first and second surfaces (13, 14), and
at least one passive engaging portion (16) that is formed in one of said first and second surfaces (13, 14); and
a connecting member (20) having
a main portion (21) that has a first face (213), and that is adjacent to said first surface (13) of said supporting member (10),
a first coupling portion (22) that is connected to said main portion (21), and that removably extends through said at least one through hole (15),
a second coupling portion (23) that is connected to said first coupling portion (22), and that removably abuts against said second surface (14) of said supporting member (10), and
an active engaging portion (24) that is connected to one of said main portion (21) and said second coupling portion (23), and that removably engages said at least one passive engaging portion (16) of said supporting member (10).

2. The mudguard supporting device as claimed in claim 1, **characterized in that**:
said supporting member (10) extends along a first axis (X);
said first and second surfaces (13, 14) are elongated along the first axis (X);
said at least one passive engaging portion(16) of said supporting member (10) is configured as a slot;
said connecting member (20) has a rectangular cross-section perpendicular to the first axis (X);
said first coupling portion (22) of said connecting member (20) is transverse to said main portion (21) of said connecting member (20);
said second coupling portion (23) of said connecting member (20) is transverse to said first coupling portion (22) and is substantially parallel to said first face (213) of said main portion (21); and
said active engaging portion (24) of said connecting member (20) is connected to said second coupling portion (23), and cooperates with said first coupling portion (22) and said second coupling portion (23) to form a C-shaped structure.

3. The mudguard supporting device as claimed in claim 2, further **characterized in that**:
said second coupling portion (23) of said connecting member (20) has a side surface (231) that is substantially parallel and offset from said first face (213) of said main portion (21);
said active engaging portion (24) has a distal end (241) that is opposite to said second coupling portion (23); and
a distance (h) between said side surface (231) and said distal end (241) is smaller than a width (w) of said at least one through hole (15) in a direction of the first axis (X).

4. The mudguard supporting device as claimed in any one of claims 2 and 3, further **characterized in that**:
said main portion (21) of said connecting member (20) is adapted to be coupled to a mudguard (1);
said supporting member (10) has a first installing portion (11) and a second installing portion (12) that is opposite said first installing portion (11) along the first axis (X);
said through hole (15) and said at least one passive engaging portion (16) are formed in said first installing potion (11) and are arranged along the first axis (X); and
said second installing portion (12) is adapted to be connected to a bicycle frame.

5. The mudguard supporting device as claimed in any one of claims 1 to 4, **characterized in that**:
said at least one passive engaging portion (16) of said supporting member (10) is formed in said second surface (14); and
said supporting member (10) further has two protrusions (17) that protrude from said second surface (14), that extend in the first axis (X), and that cooperate with said second surface (14) to define an elongated groove (18), said second coupling portion (23) of said connecting member (20) being removably retained in said elongated groove (18).

6. The mudguard supporting device as claimed in claim 1, **characterized in that**:
said supporting member (10) extends along a first axis (X);
said at least one through hole (15) of said supporting member (10) is elongated along the first axis (X);
said at least one passive engaging portion (16) of said supporting member (10) extends through said first and second surfaces (13, 14), and intersects said at least one through hole (15);
said main portion (21) and said first coupling portion (22) of said connecting member (20) are perpendicular to each other;
said second coupling portion (23) of said connecting member (20) extends in a direction perpendicular to the first axis (X), and has a length in the direction perpendicular to the first axis (X) not larger than a length of said at least one through hole (15) along the first axis (X);
a width of said first coupling portion (22) in the direction perpendicular to the first axis (X) is not larger than that of said at least one through hole (15) ; and
said active engaging portion (24) protrudes from said main portion (21) .

7. The mudguard supporting device as claimed in claim 6, further **characterized in that**:
said supporting member (10) has a plurality of said passive engaging portions (16);
said supporting member (10) further has a first installing portion (11), and a second installing portion (12) that is opposite said first installing portion (11) along the first axis (X);
said passive engaging portions (16) are formed in said second installing portion (12) along the first axis (X) and are spaced apart from each other;
said main portion (21) of said connecting member (20) has an inner end section (214) and an outer end section (215) that is opposite said inner end section (214), said first coupling portion (22), said second coupling portion (23) and said active engaging portion (24) being disposed at said inner end section (214), such that a length of said mudguard supporting device between said first installing portion (11) of said supporting member (10) and said outer end section (215) is adjustable by engaging said active engaging portion (24) of said connecting member (20) with a selected one of said passive engaging portions (16) of said supporting member (10).

8. The mudguard supporting device as claimed in claim 7, further **characterized in that**:
said outer end section (215) of said main portion (21) of said connecting member (20) is adapted to be connected to a bicycle frame; and
said supporting member (10) is a mudguard strut adapted to be coupled to a mudguard (1).
